(19) Europäisches Patentamt
European Patent Office
Office européen des brevets

(11) **EP 3 229 047 A1**

(12) **EUROPEAN PATENT APPLICATION**

(43) Date of publication:
**11.10.2017 Bulletin 2017/41**

(51) Int Cl.:
**G02B 5/12** *(2006.01)*    **G06K 9/20** *(2006.01)*

(21) Application number: **16163859.8**

(22) Date of filing: **05.04.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **3M Innovative Properties Company St. Paul, MN 55133-3427 (US)**

(72) Inventors:
- **GELDMACHER, Andreas Martin**
  **41539 Dormagen (DE)**

- **LIERSE, Markus Gunther**
  **41517 Grevenbroich (DE)**
- **HANSEN, Katja**
  **40219 Düsseldorf (DE)**
- **KIRCHMEYER, Domenica**
  **41751 Viersen (DE)**
- **TACKE, Lothar**
  **41468 Neuss (DE)**
- **BIALLUCH, Robert**
  **47877 Willich (DE)**

(74) Representative: **Bergen, Katja**
**3M Deutschland GmbH**
**OIPC**
**Carl-Schurz-Strasse 1**
**41453 Neuss (DE)**

(54) **RETROFLECTIVE ARTICLE WITH INFRARED-DETECTABLE PATTERN**

(57)    Retroreflective articles (100) including indicia formed with a high infrared blocking material (140) are described. A filter (150) having a high infrared transmission and a high visible light reflectance cover these indicia. Images may be formed on the filter layer using materials (160) that reflect at least a portion of the visible spectrum, but which have a high transmission to infrared light.

FIG. 1

## Description

<u>FIELD</u>

The present disclosure relates to retroreflective articles with infrared-detectable indicia. These indicia are formed with a material having a high infrared rejection (through, e.g., absorption or reflection). A filter having a high transmission in the infrared spectrum, and a high reflectance throughout most of the visible spectrum covers the indicia. Optionally, a layer having a high transmission in the infrared spectrum that reflects visible light in at least some portion of the visible spectrum may cover some or all of the filter.

<u>SUMMARY</u>

Briefly, in one aspect, the present disclosure provides a retroreflective article comprising an infrared retroreflective substrate; first indicia covering a portion of the retroreflective substrate, wherein the first indicia have a high rejection in the infrared spectrum; a filter covering the first indicia, wherein the filter has a high transmission in the infrared spectrum, and a high reflectance throughout most of the visible spectrum; and a layer covering at least a portion of the filter and the first indicia, wherein the second layer has a high transmission in the infrared spectrum and reflects visible light in at least some portion of the visible spectrum.

In some embodiments, the first indicia reject at least 60% of infrared light over at least 75% of the infrared spectrum having a wavelength of 750 to 1100 nanometers. In some embodiments, the filter has a transmission of greater than 60% for infrared light having a wavelength of 800 to 1000 nanometers, and a reflectance of greater than 50% over at least 75% of the spectral range from 390 to 700 nanometers. In some embodiments, the second layer transmits at least 60% of infrared light having a wavelength of 750 to 1100 nanometers.

In some embodiments, the first indicia comprise an infrared light blocking ink. In some embodiments, the filter comprises a multilayer film. In some embodiments, the layer comprises infrared light transparent, visible-light visible ink.

In some embodiments, the layer comprises second indicia. In some embodiments, the first indicia comprise a barcode.

In another aspect, the present disclosure provides a retroreflective article comprising: a substrate having a first surface comprising a first region and a second region, wherein the first region of the first surface is infrared retroreflective; and a filter covering the first and second regions, wherein the filter has a high transmission in the infrared spectrum, and a high reflectance throughout most of the visible spectrum.

In some embodiments, the first region forms infrared-visible indicia. In some embodiments, the infrared-visible indicia are machine-readable. In some embodiments, the second region comprises an infrared blocking material having a high rejection in the infrared spectrum.

In some embodiments, the article further comprises a layer covering at least a portion of the filter and the first region, has a high transmission in the infrared spectrum and reflects visible light in at least some portion of the visible spectrum. In some embodiments, the layer comprises an infrared transparent ink.

The details of one or more embodiments of the invention are also set forth in the description below. Other features, objects, and advantages of the invention will be apparent from the description and from the claims.

## BRIEF DESCRIPTION OF THE DRAWINGS

**FIG. 1** illustrates a side view of an article according to some embodiments of the present disclosure.

**FIG. 2** illustrates a top view of the exemplary article of **FIG.1** when viewed under visible light.

**FIG. 3** illustrates a top view of the exemplary article of **FIG.1** when viewed under infrared light.

## DETAILED DESCRIPTION

Retroreflective sheeting with visible printed indicia thereon, such as the ubiquitous traffic control "STOP" sign, are known. It is also known from U.S. Patent No. 6,024,455 (O'Neill et al.) to create retroreflective articles with concealed retroreflective patterns.

In many applications, it is desirable to combine human-detectable images with machine-readable indicia. "Human-detectable" means visible with the unaided human eye under ambient light conditions. Although it is possible to make the same information machine-readable, it is often desirable to provide different information, or the same information in a different form for machine detection. For example, it may be more efficient to provide the machine-readable information in the form of codes, e.g., barcodes including 2D and 3D barcodes.

In practice, this can be done by combining human-detectable images with machine-readable information on separate articles, or spaced apart on the same article. However, to minimize space or avoid confusion, it may preferable to overlap the two forms of information. In addition, in some embodiments, it may be desirable to conceal the machine-readable information.

Generally, the articles of the present disclosure combine human-readable images with infrared, retroreflected, machine-readable indicia. As used herein, "indicia" are a subset of "images," where indicia refers to a pattern that conveys information as opposed to a random or merely decorative patterns. Indicia may include, but are not limited to, alphanumeric characters, symbols, and codes, e.g., barcodes. In some embodiments, the use of barcodes are preferred.

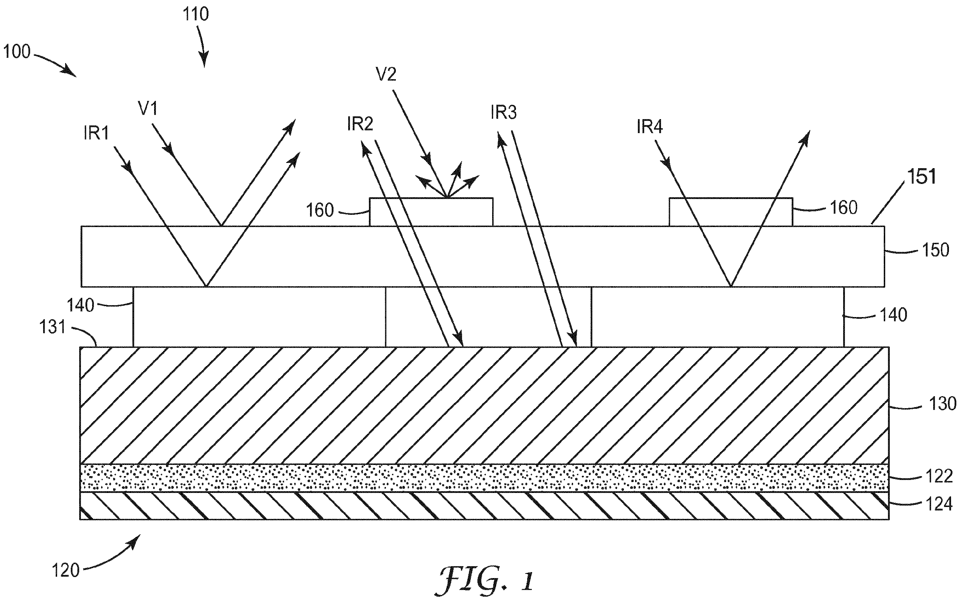

One exemplary embodiment of the articles of the present disclosure is shown in **FIG. 1.** Article **100** includes viewing surface **110** and back surface **120.** Generally, the article is intended to be viewed at some angle incident to viewing surface **110,** while back surface **120** may include various optional features such as adhesive layer **122** suitable for attaching article **100** to a desired surface or substrate. That is, one side (designated the viewing surface) is generally adapted to both receive incident light from a source and emit reflected or retroreflected light toward a detector (such as the eye of an observer or a camera), and the other side (designated the back surface) may be generally adapted for application to an object.

In the description below, with respect to any layer or element, "top surface" refers to the surface of that layer or element that is closer to viewing surface **110.** Similarly, "bottom surface" refers to the surface of that layer or element that is closer to back surface **120.** Therefore, top surface and bottom surface do not refer to any particular spatial orientation of the article, but rather refer to positions relative to the viewing and back surfaces of article **100.**

Retroreflective layer **130** may comprise any known retroreflective substrate. Retroreflective layer **130** retroreflects infrared light and may also retroreflect visible light.

As used herein, "retroreflective" refers to the attribute of reflecting an obliquely incident light ray in a direction antiparallel to its incident direction, or nearly so, such that it returns to the light source or the immediate vicinity thereof. As used herein, "reflect" and "reflective" refer to any combination of specular and diffuse reflection, but exclude retroreflection.

Exemplary retroreflective layers include microsphere-based sheeting and microstructured-based sheeting (e.g., cube corner sheeting). Microsphere-based sheeting, sometimes called "beaded" sheeting, employs a multitude of microspheres typically at least partially imbedded in a binder layer and having associated specular or diffuse reflecting materials (e.g., pigment particles, metal flakes, vapor coats) to retroreflect incident light. Microstructured-based sheeting comprises a body portion typically having a substantially planar front surface and a structured rear surface comprising a plurality of microstructured elements. For example, cube corner retroreflective sheeting comprises a plurality of cube corner elements with each cube corner element comprises three approximately mutually perpendicular optical faces.

A variety of retroreflective substrates suitable for use in the articles of the present disclosure are commercially available. Exemplary microsphere based sheetings include those available under the tradenames 3M SCOTCHLITE 9920 Silver Industrial Wash Fabric and 3M PRECLEAR REFLECTIVE LICENSE PLATE SHEETING Series 4790 from 3M Company, St. Paul, Minnesota, U.S.A. Exemplary microstructure based sheetings include those available under the tradenames 3M DG3 DIAMOND GRADE Reflective sheeting and 3M ADVANCED ENGINEER GRADE Prismatic Sheeting from 3M Company.

Infrared ("IR") blocking material **140** is positioned over top surface 131 of retroreflective layer **130.** IR-blocking material **140** has high rejection in the infrared (IR) spectrum of the desired IR-source and IR detector. As used herein, "high rejection in the IR spectrum" means blocking (i.e., preventing the transmission) of at least 60%, e.g., at least 70%, over at least about 75%, e.g., at least 90% of the desired IR wavelength range.

Commercially available IR sources include those operating at around 780 nm, around 850 nm, and around 930 nm. Other sources may also be used. In some embodiments, the IR-blocking material will reject light over at least about 75%, e.g., at least 90% of the wavelength spectrum of 750 to 1200 nm, e.g., 750 to 1000 nm, or even 800 to 1000 nm.

Infrared light may be blocked (rejected) by any means or combination of means including any combination of reflectance (diffuse and specular) and absorption. Although not critical to the performance of the articles of the present disclosure, IR-blocking material **140** may also prevent some or all incident light at other wavelengths, e.g., visible light, from reaching retroreflective layer **130.**

In some embodiments, IR-blocking material **140** may comprise a dye or pigment which absorbs, diffracts, reflects or otherwise inhibits the transmission of IR-light through IR-blocking material **140.** Many commercially-available inks and coatings may be suitable for this purpose. For example, in some embodiments, IR-blocking material **140** may comprise black ink.

In some embodiments, IR-blocking material **140** may comprise an IR-opaque layer directly or indirectly bonded (through one or more intermediate layers, e.g. an adhesive) to top surface **131** of retroreflective layer **130.** In some embodiments, this layer may selectively block the transmission of IR-light.

IR-blocking material **140** is positioned over selected portions of top surface 131 of retroreflective layer **130** to form a machine-readable indicia such as alphanumeric characters, symbols, and codes, e.g., barcodes. In some embodiments, the use of barcodes are preferred.

Generally, the machine-readable indicia are formed by the contrast between the intensity of infrared light retroreflected from areas of the retroreflective layer unblocked by IR-blocking material **140,** as compared to the intensity of infrared light retroreflected from areas of the retroreflective layer blocked by IR-blocking material **140.** In some embodiments, the intensity of infrared light retroreflected from the areas of retroreflective layer blocked by IR-blocking material **140** will be close to that predicted for diffuse reflection.

In some embodiments, the machine-readable indicia will be visible under visible light and detectable or even readable with the unaided human eye. For example alphanumeric indicia formed from inks, e.g., blank inks, coatings, or opaque layers may be human-readable when illuminated with visible light. Similarly, bar codes may be visible with the unaided eye.

Filter 150 is positioned over top surface 131 of retroreflective layer 130 covering both IR-blocking material 140 and the unblocked regions of the retroreflective layer. Filter 150 has a high transmission in the infrared (IR) spectrum, at least in wavelength range of the IR-illumination source and IR-detector. As used herein, "high transmission in the IR spectrum" means a transmission of greater than 60%, e.g., greater than about 70% of the desired IR spectral range, e.g., 750 to 1200 nm, e.g., 750 to 100 nm, or even 800 to 1000 nm.

Filter 150 also selectively blocks the transmission of visible light, e.g., through one or more of reflectance, scattering, and absorption of visible light. In some embodiments, filter 150 blocks greater than 60%, e.g., greater than about 70%, over at least 75%, e.g., at least 90%, of the spectral range from 390 to 700 nm.

In some embodiments, filter 150 may comprise inorganic alternating layers deposited on a substrate using vacuum deposition techniques. However such inorganic filters are expensive and often of limited surface area. They also tend to have poor adhesion to polymeric surfaces.

In some embodiments, filter 150 comprises a multilayer polymeric film, e.g., a multilayer polymeric film having a percent reflectance and transmission which are substantially complementary (i.e., absorption is preferably low or negligible) for wavelengths of interest, and which are functions of the refractive indices and thicknesses of the constituent polymeric layers, as well as of the orientation and polarization of incident light.

Filter 150 provides relatively high transmission (and relatively low reflectance) of IR-light at least in wavelength range of the IR-illumination source and IR-detector, so that IR-light within wavelength range may reach IR-blocking material 140 and retroreflective layer 130, be retroreflected, pass again through filter 150, and be machine detectable.

In some embodiments, filter 150 results has a high reflectance throughout most of the visible spectrum so that in ambient lighting conditions viewing surface 110 of article 100 has a shiny mirror-like appearance. By "high reflectance throughout most of the visible spectrum" we mean a reflectance greater than 50%, and preferably greater than about 80%, over at least about 75% of the spectral range from about 390 to about 700 nm.

Generally, the amount of reflectance should be such that that the amount of visible light allowed to pass through filter 150, reached IR-blocking material 140 and retroreflective layer 130, and return through filter 150 is insufficient to be detectable by the unaided human eye.

Generally, the reflectance and transmission spectra of a particular multilayer film used to form filter 150 primarily depends on the optical thickness of the individual layers along the various axes, and is substantially determined by the well-known Fresnel coefficients. Films can be designed to reflect infrared, visible, or ultraviolet light by choice of the appropriate optical thicknesses of the layers in accordance with the following formula:

$$\lambda_M = (2/M) \bullet D_r \quad (I)$$

where M is an integer representing the particular order of the reflected light and $D_r$ is the optical thickness of an optical repeating unit ("ORU"). Accordingly, $D_r$ is the sum of the optical thicknesses of the individual layers that make up the ORU. By arranging the ORUs along the thickness of the multilayer film in a series such that the optical thicknesses of the ORUs conform to a give profile, a multilayer film can be designed that reflects light over a broad reflection band.

A reflecting multilayer film having the properties described herein can be made by employing a multilayer coextrusion device as described in U.S. Pat. Nos. 3,773,882 (Schrenk) and 3,884,606 (Schrenk). Such a device provides a method for preparing multilayered, simultaneously extruded thermoplastic materials, each layer of which has a substantially uniform layer thickness. Optionally, this multilayered stream can be subsequently passed through a series of layer multiplying means, such as described in U.S. Pat. Nos. 3,759,647 (Schrenk et al.), 5,094,788 (Schrenk et al.), or 5,094,793 (Schrenk et al.), in order to further increase the number of layers in the final film. The multilayered stream is then passed into an extrusion die which is so constructed and arranged (see, e.g., U.S. Pat. No. 3,557,265 (Chisholm et al.)) that streamlined flow is maintained therein. The resultant product is extruded to form a multilayered film in which each layer is generally parallel to the major surface of adjacent layers. In the case of mirrors and reflective polarizers, the number of layers is preferably less than about 10,000, more preferably less than about 5,000, and (even more preferably) less than about 2,000.

The desired relationship between refractive indices of polymeric layers can be achieved by selection of appropriate materials and appropriate processing conditions. In the case of organic polymers which can be oriented by stretching, the multilayer films are generally prepared by coextruding the individual polymers to form a multilayer film (as set forth above) and then "orienting" the reflective film body by stretching at a selected temperature, optionally followed by heat-setting at a selected temperature. Alternatively, the extrusion and orientation steps can be performed simultaneously. By the orientation, the desired extent of birefringence (positive or negative) is set in those polymeric layers that comprise a polymer that can exhibit birefringence. In the case of mirrors, the film can be stretched substantially in two directions (biaxial orientation) to produce a mirror film where any given individual layer has substantially the same in-plane refractive indices and at least some of such layers have an out-of-plane refractive index different from the in-plane indices (and therefore are birefringent). The mirror film body can be allowed to dimensionally relax in the cross-stretch direction from the natural reduction in cross-stretch (equal to the square root of the stretch ratio) to being constrained (i.e., no substantial change in cross-stretch dimensions). The film body can be stretched in the machine direction, as with a length orienter, and/or in width using a tenter. The pre-stretch temperature, stretch rate, stretch ratio, heat set temperature, heat set time, heat set relaxation, and cross-stretch relaxation are selected to yield a multilayer film having the desired refractive index relationship. These variables are interdependent: thus, for example, a relatively low stretch rate could be used if coupled with, e.g., a relatively low stretch temperature. It will be apparent to one of ordinary skill how to select the appropriate combination of these variables to achieve the desired multilayer device. In general, however, a stretch ratio in the range from about 1:2 to about 1:10 (more preferably about 1:3 to about 1:7) in the stretch direction and from about 1:0.2 to about 1:10 (more preferably from about 1:0.2 to about 1:7) orthogonal to the stretch direction is preferred.

Orientation of the extruded film can be done by stretching individual sheets of the material in heated air. For economical production, stretching can be accomplished on a continuous basis in a standard length orienter, tenter oven, or both. Economies of scale and line speeds of standard polymer film production can be achieved thereby achieving manufacturing costs that are substantially lower than costs associated with commercially available absorptive polarizers. Lamination of two or more multi-layer films can also be practiced to obtain a mirror film. Amorphous copolyesters are useful as laminating materials, with VITEL Brand 3000 and 3300 from the Goodyear Tire and Rubber Co. of Akron, Ohio, noted as materials that have been tried. The choice of laminating material is broad, with adhesion to the multi-layer films, optical clarity and exclusion of air being the primary guiding principles. It may be desirable to add to one or more of the layers, one or more inorganic or organic adjuvants such as an antioxidant, extrusion aid, heat stabilizer, ultraviolet ray absorber, nucleator, surface projection forming agent, and the like in normal quantities so long as the addition does not substantially interfere with the desired performance.

One class of polymeric materials incorporated into the multilayer film preferably produce birefringent polymeric layers. These materials are characterized in that stretching in a given direction substantially alters one or more of its refractive indices, and a particularly preferred layer is one containing a crystalline or semi-crystalline polyethylene naphthalate (PEN) inclusive the isomers (e.g. 2,6-; 1,4-; 1,5-; 2,7; and 2,3-PEN). Another class of polymeric materials incorporated into the multilayer film preferably produce substantially isotropic polymeric layers. These materials are characterized in that stretching in a given direction has little or no effect on its refractive indices, and a particularly preferred layer is one containing a layer containing a polymethylmethacrylate and in particular polymethylmethacrylate itself.

Other materials suitable for use in constructing filter **150** are described in, e.g., U.S. 6,024,455 (O'Neill et al.) at column 13, line 15 through column 20, line 18.

Visible image **160** is positioned over top surface **151** of filter **150**. In some embodiments, visible image **160** is bonded directly to top surface **151**. However, in some embodiments, an intermediate layer, e.g., a primer layer or protective layer may be interposed between visible image **160** and top surface **151**. If present, such intermediate layers should be substantially transparent to both visible and infrared light so as not to interfere with the desired optical performance of the article.

Visible image **160** is formed of some material that reflects (i.e., some combination of diffuse and specular reflection) at least some range of the visible light spectrum (390 to 700 nanometers) such that visible image **160** is human-detectable. These human-detectable images may include decorative features (e.g., patterns). These human-detectable images may include indicia such as alphanumeric characters, symbols, and codes.

The material forming visible image **160** has high transmittance in the infrared (IR) spectrum of the desired IR-source and IR detector. As used herein, "high transmittance in the IR spectrum" means a transmission of greater than 60%, and preferably greater than about 70%, over at least about 75% of the desired IR wavelength range, e.g., 750 to 1200 nm, e.g., 750 to 1000 nm, or even 800 to 1000 nm.

Suitable infrared light sources are readily available. Generally, these light sources include an array of infrared LEDs. Common LED wavelengths include 780 nm, 850 nm, and 930 nm. Although sources with higher wavelengths (e.g., above 1000 nm) are available, the associated systems (sources and detectors) become expensive. For wavelengths below 750 nm, the human eye begins to be able to detect the image, making such sources less suitable for many applications. Exemplary IR light sources include those available in the VTR Series (e.g., VTR2, VTR4, and VTR6, believed to operate at 850 nm) from GARDASOFT VISION LTD.

Suitable infrared detectors are also readily available, and may be selected in combination with the IR light source to ensure compatibility. Cameras, e.g., video cameras, form the basic element of many detectors. Such detectors may include a Complimentary Metal-Oxide Sensor (CMOS). Exemplary detectors include GRASSHOPPER 3 from Point Grey Research Incorporated.

In some embodiments, visible image **160** may be formed using a variety of commercial available inks. For example, common process color inks (i.e., cyan, magenta and yellow inks) may be used alone or in combination to form a vast arrays of visible colors, while still providing high transmittance of IR light. Also, there are a variety of commercial sources offering IR-transparent black inks, including, e.g., NAZDAR Ink Technologies, Shawnee, Kansas, U.S.A., and Infrared Coatings, Mammoth Spring, Arkansas, U.S.A.

Referring to **FIG. 1,** the effects of the various elements of article **100** on visible light are shown through arrows **V1** and **V2**. Similarly, the effects of the various elements of article **100** on IR light are shown through arrows **IR1, IR2, IR3,** and **IR4**.

As shown by arrow **V1,** some visible light incident on viewing surface **110** of article 100 will not encounter the material forming visible image **160**. This light may be specularly reflected by filter **150,** as shown. As shown by arrow **V2,** some visible light incident on viewing surface **110** of article **100** will encounter the material forming visible image **160**. At least some of this visible light will be reflected, for example, diffusely reflected, as shown. As a result, a human-detectable image is formed.

Referring to arrows **IR1** and **IR4,** some IR light incident on viewing surface **110** of article **100** will encounter IR-blocking material **140**. Before reaching IR-blocking material **140,** this IR-light is transmitted through filter **150,** which has a high transmittance in the relevant IR-spectrum. The IR-light encountering IR-blocking material is substantially prevented from reaching retroreflective layer, e.g., because of absorption, specular or diffuse reflection. Because the material forming visible image **160** also has a high IR transmittance, IR light encountering visible image **160** (arrow **IR4**) and IR light that does not encounter visible image **160** (arrow **IR1**) show similar or identical optical results.

Referring to arrows **IR2** and **IR3,** some IR light incident on viewing surface **110** of article **100** will not encounter IR-blocking material **140**. This IR light is retroreflected by retroreflective layer **130**. Before reaching retroreflective layer **130** this IR-light is transmitted through filter **150,** which has a high transmittance in the relevant IR-spectrum. Because the material forming visible image **160** also has a high IR transmittance, IR light encountering visible image **160** (arrow **IR2**) and IR light that does not encounter visible image **160** (arrow **IR3**) show similar or identical optical results.

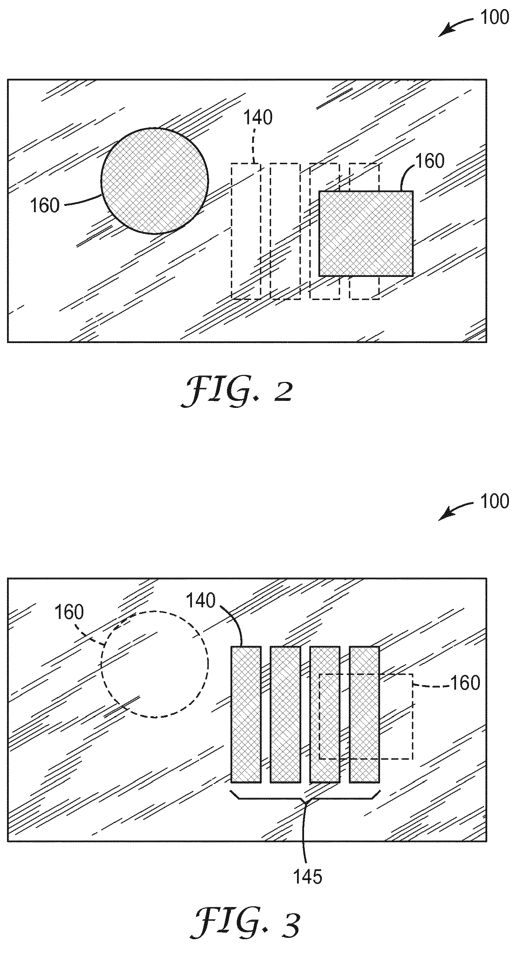

Referring to **FIG. 2,** through this combination of visible-light reflecting and IR-light transmitting properties, visible image **160** may be applied over some or all of IR-blocking material **140**. When viewed under visible light, visible image **160** is detectable by the human eye. Filter **150** conceals the presence of IR-blocking material **140,** preventing its presence from interfering with the appearance of the image **165** formed by visible ink **160**. IR-blocking material **140** is shown in dashed line to indicate it presence behind filter **150** and visible image **160**.

Referring to **FIG. 3,** when viewed under IR illumination, neither the visible image **160** nor filter **150** will prevent detection of the retroreflected indicia **145** formed by the patterned application of IR-blocking material **140** over the retroreflective substrate. Visible image **160** is shown in dashed lines to indicate its presence in front of retroreflected indicia **145**.

Referring to **FIG. 1,** article **100** may include optional adhesive layer **122**. Generally, if present, any known adhesive may be used, including, e.g., pressure sensitive adhesives. In some embodiments, the adhesive may be protected by release liner **124** which protect the adhesive during handling, and is removed prior to applying article **100** to an article by, for example bonding through adhesive layer **122**.

Although not shown, other optional layers may be included in various embodiments of the present disclosure. For example, overlaminating films or coatings (e.g., UV protecting layers or clear coats) may be applied to protect article **100**. However, the selection of such materials should be controlled to avoid substantially interference with the optical performance of the resulting article.

Example. An exemplary retroreflective article according to some embodiments of the present disclosure was prepared.

3M (TM) DIAMOND GRADE DG3 RELFECTIVE SHEETING (available from 3M (TM) Company, St. Paul, Minnesota, U.S.A) was used as the retroreflective layer. This is a full cube prismatic sheeting which includes a pressure sensitive adhesive and release liner. Piezo Inkjet Ink 8805UV (black) ink from 3M Company was used as the IR-blocking material. It was ink jet printed onto the retroreflective substrate in the form of a bar code indicia.

3M (TM) SOLAR MIRROR FILM was used as the filter. It includes an adhesive layer and release liner. The release liner was removed and the filter was adhered to the surface of the retroreflective film, covering the printed IR-blocking material.

A visible image was printed on the filter using Piezo Inkjet Ink Series 8800UV inks from 3M Company. The visible image was inkjet printed using 8812UV red ink, 8814UV yellow ink, and 8816UV cyan ink.

When viewed under ambient light, the visible image was human-readable against a mirror-like background provided by the filter. The underlying image created with the IR-blocking material was not detectable with the unaided human eye.

When exposed to IR light, the barcode printed with the IR-blocking material was visible and could be imaged with a camera at sufficient contrast to be read with standard barcode reading software.

Various modifications and alterations of this invention will become apparent to those skilled in the art without departing from the scope and spirit of this invention.

**Claims**

1. A retroreflective article comprising:

   an infrared retroreflective substrate;

first indicia covering a portion of the retroreflective substrate, wherein the first indicia have a high rejection in the infrared spectrum;

a filter covering the first indicia, wherein the filter has a high transmission in the infrared spectrum, and a high reflectance throughout most of the visible spectrum; and

a layer covering at least a portion of the filter and the first indicia, wherein the second layer has a high transmission in the infrared spectrum and reflects visible light in at least some portion of the visible spectrum.

2. The retroreflective article of claim 1, wherein the first indicia reject at least 60% of infrared light over at least 75% of the infrared spectrum having a wavelength of 750 to 1100 nanometers.

3. The retroreflective article of claim 1 or 2, wherein the filter has a transmission of greater than 60% for infrared light having a wavelength of 800 to 1000 nanometers, and a reflectance of greater than 50% over at least 75% of the spectral range from 390 to 700 nanometers.

4. The retroreflective article of any one of the preceding claims, wherein the second layer transmits at least 60% of infrared light having a wavelength of 750 to 1100 nanometers.

5. The retroreflective article of any one of the preceding claims, wherein the first indicia comprise an infrared light blocking ink.

6. The retroreflective article of any one of the preceding claims, wherein the filter comprises a multilayer film.

7. The retroreflective article of any one of the preceding claims, wherein the layer comprises infrared light transparent, visible-light visible ink.

8. The retroreflective article of any one of the preceding claims, wherein the layer comprises second indicia.

9. The retroreflective article of any one of the preceding claims, wherein the first indicia comprise a barcode.

10. A retroreflective article comprising:

a substrate having a first surface comprising a first region and a second region, wherein the first region of the first surface is infrared retroreflective; and

a filter covering the first and second regions, wherein the filter has a high transmission in the infrared spectrum, and a high reflectance throughout most of the visible spectrum.

11. The retroreflective article of claim 10, wherein the first region forms infrared-visible indicia.

12. The retroreflective article of claim 11, wherein the infrared-visible indicia are machine-readable.

13. The retroreflective article of any one of claims 10 to 12, wherein the second region comprises an infrared blocking material having a high rejection in the infrared spectrum.

14. The retroreflective article of any one of claims 10 to 13, further comprising a layer covering at least a portion of the filter and the first region, has a high transmission in the infrared spectrum and reflects visible light in at least some portion of the visible spectrum.

15. The retroreflective article of claim 14, wherein the layer comprises an infrared transparent ink.

*FIG. 1*

EP 3 229 047 A1

*FIG. 2*

*FIG. 3*

Europäisches
Patentamt
European
Patent Office
Office européen
des brevets

# EUROPEAN SEARCH REPORT

**Application Number**

EP 16 16 3859

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X,D | US 6 024 455 A (O'NEILL MARK [US] ET AL) 15 February 2000 (2000-02-15) * column 10, line 48 - line 55; figures 1,3 * | 1-8, 10-14 | INV. G02B5/12 G06K9/20 |
| A | US 2007/139775 A1 (REICH JAMES E [US] ET AL) 21 June 2007 (2007-06-21) * figure 3 * | 1-15 | |
| A | US 2010/151213 A1 (SMITHSON ROBERT L W [US] ET AL) 17 June 2010 (2010-06-17) * example 3 * | 1-15 | |
| A | US 2011/211257 A1 (HANNINGTON MICHAEL [US] ET AL) 1 September 2011 (2011-09-01) * figure 1 * | 1-15 | |

**TECHNICAL FIELDS SEARCHED    (IPC)**

G02B
G06K

The present search report has been drawn up for all claims

| Place of search | Date of completion of the search | Examiner |
|---|---|---|
| Munich | 8 September 2016 | Rödig, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 3859

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2016

| Patent document cited in search report | | Publication date | Patent family member(s) | | Publication date |
|---|---|---|---|---|---|
| US 6024455 | A | 15-02-2000 | AU | 738111 B2 | 06-09-2001 |
| | | | AU | 1812699 A | 02-08-1999 |
| | | | BR | 9814000 A | 10-10-2000 |
| | | | CA | 2316266 A1 | 22-07-1999 |
| | | | CN | 1285047 A | 21-02-2001 |
| | | | DE | 69816129 D1 | 07-08-2003 |
| | | | DE | 69816129 T2 | 08-01-2004 |
| | | | EP | 1047960 A1 | 02-11-2000 |
| | | | ES | 2198087 T3 | 16-01-2004 |
| | | | JP | 2002509277 A | 26-03-2002 |
| | | | US | 6024455 A | 15-02-2000 |
| | | | WO | 9936806 A1 | 22-07-1999 |
| US 2007139775 | A1 | 21-06-2007 | EP | 1798670 A1 | 20-06-2007 |
| | | | JP | 2007171956 A | 05-07-2007 |
| | | | US | 2007139775 A1 | 21-06-2007 |
| US 2010151213 | A1 | 17-06-2010 | AU | 2009330604 A1 | 07-07-2011 |
| | | | BR | PI0917777 A2 | 01-03-2016 |
| | | | CN | 102282044 A | 14-12-2011 |
| | | | EP | 2370294 A1 | 05-10-2011 |
| | | | EP | 2921352 A1 | 23-09-2015 |
| | | | JP | 5932336 B2 | 08-06-2016 |
| | | | JP | 2012512428 A | 31-05-2012 |
| | | | KR | 20110110160 A | 06-10-2011 |
| | | | US | 2010151213 A1 | 17-06-2010 |
| | | | US | 2014285889 A1 | 25-09-2014 |
| | | | WO | 2010074875 A1 | 01-07-2010 |
| | | | ZA | 201105220 B | 28-03-2012 |
| US 2011211257 | A1 | 01-09-2011 | BR | 112012004113 A2 | 23-08-2016 |
| | | | CN | 102576104 A | 11-07-2012 |
| | | | EP | 2470931 A2 | 04-07-2012 |
| | | | EP | 3043195 A1 | 13-07-2016 |
| | | | EP | 3043196 A1 | 13-07-2016 |
| | | | ES | 2566399 T3 | 12-04-2016 |
| | | | KR | 20120079077 A | 11-07-2012 |
| | | | RU | 2012111233 A | 10-10-2013 |
| | | | US | 2011211257 A1 | 01-09-2011 |
| | | | WO | 2011031501 A2 | 17-03-2011 |
| | | | ZA | 201201403 B | 29-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6024455 A, O'Neill
- US 3773882 A, Schrenk
- US 3884606 A, Schrenk
- US 3759647 A, Schrenk
- US 5094788 A, Schrenk
- US 5094793 A, Schrenk
- US 3557265 A, Chisholm
- US 6024455 O, O'Neill